# EUROPÄISCHE PATENTSCHRIFT

(11) **EP 0 983 163 B1**
(45) Veröffentlichungstag und Bekanntmachung des Hinweises auf die Patenterteilung: **18.12.2002**
(21) Anmeldenummer: 98925610.2
(22) Anmeldetag: 16.05.1998
(51) Int. Cl.: B60Q 1/14

(54) **VERFAHREN ZUM ERZEUGEN EINES WARNSIGNALS ZUM EINSCHALTEN DER LICHTANLAGE EINES FAHRZEUGS UND VORRICHTUNGEN ZUR VERWENDUNG BEI DEM VERFAHREN**
METHOD FOR GENERATING A WARNING SIGNAL TO SWITCH ON THE LIGHTING SYSTEM OF A VEHICLE AND DEVICES FOR USE WITH SAID METHOD
PROCEDE PERMETTANT D'EMETTRE UN SIGNAL D'AVERTISSEMENT POUR LA MISE SOUS TENSION DU SYSTEME D'ECLAIRAGE D'UN VEHICULE ET DISPOSITIFS D'UTILISATION POUR LA MISE EN OEUVRE DE CE PROCEDE

(30) Priorität: 28.05.1997 DE 19722227
(43) Veröffentlichungstag der Anmeldung: 08.03.2000
(73) Patentinhaber: Siemens Aktiengesellschaft, 80333 München (DE)
(72) Erfinder: WALLRAFEN, Werner, D-65719 Hofheim (DE)
(86) Internationale Anmeldenummer: EP9802902
(87) Internationale Veröffentlichungsnummer: WO98054029

(56) Entgegenhaltungen:
- DE-A- 2 559 184
- DE-A- 3 632 818
- DE-U- 29 610 507
- FR-A- 1 411 513
- US-A- 5 247 440
- PATENT ABSTRACTS OF JAPAN vol. 007, no. 279 (M-262), 13. Dezember 1983 & JP 58 156428 A (HITACHI SEISAKUSHO KK), 17. September 1983

## Beschreibung

Die Erfindung betrifft ein Verfahren zum Erzeugen eines Warnsignals zum Einschalten der Lichtanlage eines Fahrzeugs gemäß dem Oberbegriff des Patentanspruchs 1 sowie eine Vorrichtung zur Anwendung des Verfahrens gemäß dem Oberbegriff des Patentanspruchs 13.

Ein Verfahren der genannten Art umfaßt im allgemeinen einen lichtempfindlichen Sensor, der an der Außenseite eines Fahrzeugs angebracht ist und ein Außenlichtsignal erzeugt, mit welchem mittels einer Steuereinheit ein Warnsignal an den Bediener abgegeben wird. Sensoren dieser Art haben den Nachteil, daß sie leicht verschmutzen, da sie vorzugsweise in exponierter Position an ungeschützten Karosserieelementen angeordnet sein müssen. Es kommt daher leicht zu Fehlfunktionen, wenn beispielsweise Schmutz oder Schnee den Sensor ganz oder teilweise abdeckt. Für eine einwandfreie Funktion ist folglich eine regelmäßige Reinigung der Oberfläche des Sensors erforderlich.

Ebenso nachteilig wirkt sich aus, daß der Einbau des Sensors mit zusätzlichen Kosten verbunden ist. Für den Sensor müssen eigene Anschlüsse vorgesehen und eine Einbaumöglichkeit an der Karosserieaußenseite geschaffen werden, wobei der Sensor nicht von anderen Bauteilen in seiner Funktion beeinflußt werden darf. Ein weiterer Nachteil ist darin zu sehen, daß das optische Erscheinungsbild durch den nach außen sichtbaren Sensor gestört wird. Gerade das Design und die Windschnittigkeit moderner Fahrzeuge erfordert glatte Karosserieoberflächen. Dabei wirkt eine zusätzliche Karosserieöffnung störend auf den Gesamteindruck. Ein wesentlicher Nachteil dieser Sensoren resultiert aus der Störanfälligkeit gegenüber Fremdlichtquellen und dem gerade im Stadtbereich vorhandenen Streulicht. Dieser Einfluß könnte dazu führen, daß Fehlinformationen abgeleitet werden. Im Stadtbereich wird besonders häufig vergessen, die Fahrzeugbeleuchtung bei Dunkelheit einzuschalten. Dies hat seine Ursache in dem noch vorhandenen Restlicht, wodurch der Bediener nicht unmittelbar darauf aufmerksam wird, daß seine Beleuchtung nicht eingeschaltet ist. Die Auslegung solcher Sensoren muß daher immer ein Kompromiß bleiben, da einerseits eine unempfindliche Auslegung des Sensors, die erst bei völliger Dunkelheit ein Signal des Sensors bewirkt, bei Dämmerung kein Warnsignal auslöst, andererseits eine empfindliche Auslegung des Sensors, zu unnötigen Warnsignalen führt. Weiterhin ist im Übergangsbereich (Halbdunkel) keine eindeutige Entscheidung zum Einschalten der Lichtanlage gegeben.

Aus der US-A-5,247,440 ist ein Verfahren zum Einschalten der Lichtanlage eines Fahrzeuges aufgrund eines Signales bekannt, welches die Positionsdaten des Fahrzeuges enthält und die mit Hilfe eines im Fahrzeug befindlichen Navigationssystems ausgewertet werden. In Abhängigkeit von in Speichern des Navigationssystemes abgelegten Zeittafeln wird die Lichtanlage des Fahrzeuges ein- oder ausgeschaltet.

Der Erfindung liegt das Problem zugrunde, ein Verfahren zum Erzeugen eines Warnsignals zum Einschalten der Lichtanlage eines Fahrzeugs bei unzureichender Umgebungshelligkeit aufgrund eines Außenlichtsignals zu entwickeln, welches unabhängig von Störeinflüssen zuverlässig funktioniert. Weiterhin soll eine Vorrichtung zur Verwendung bei dem Verfahren geschaffen werden.

Erfindungsgemäß wird die Aufgabe durch die Merkmale des Kennzeichens des Patentanspruchs 1 gelöst. Somit wird der Fahrzeugführer nur mit den für ihn wesentlichen Informationen versorgt, da das Warnsignal der Lichtanlage nur dann erscheint, wenn diese nicht bereits eingeschaltet ist.

Dieses Verfahren ermöglicht in besonders vorteilhafter Weise die Erkennung des Außenlichtes, ohne dafür einen Sensor am Fahrzeug anbringen zu müssen. Dadurch wird insbesondere die Herstellung kostengünstiger. Weiterhin entfällt bei Anwendung des Verfahrens eine zusätzliche Karosserieöffnung, wodurch das optische Erscheinungsbild verbessert wird. Das Verfahren ist gegenüber Störeinflüssen weitgehend unempfindlich und ermöglicht es, unabhängig vom Aufenthaltsort des Fahrzeugs ein Warnsignal zu erzeugen.

Besonders einfach und unter Ausnutzung vorhandener Einrichtungen läßt sich das erfindungsgemäße Verfahren gestalten, wenn das Funksignal mittels eines im Fahrzeug angeordneten Radios empfangen wird. Die Sendestationen können die gewünschten Informationen einfach übertragen und weisen vielfach bereits Einrichtungen zur Übertragung nicht wahrnehmbarer hörbare Signale auf. Darüber hinaus sind heute in den meisten Fahrzeugen bereits Radiogeräte vorhanden. Es könnte somit innerhalb kurzer Zeit ein wesentlicher Anteil der Verkehrsteilnehmer erreicht werden. Die regionale Empfangsreichweite bei UKW hat praktisch eine homogene Helligkeit.

Besonders gut zur Durchführung des erfindungsgemäßen Verfahrens eignen sich Signale, die überregional zuverlässig zu empfangen sind. Die Einrichtungen moderner Telekommunikationssysteme lassen sich vorteilhaft nutzen, wenn das Funksignal mittels eines im Fahrzeug angeordneten Funktelefons, insbesondere eines Autotelefons, empfangen wird.

Die Übertragung der Signale gestaltet sich bei dem erfindungsgemäßen Verfahren besonders einfach, wenn das Funksignal Daten der Umgebungshelligkeit enthält, die der Steuereinheit die Unterteilung in ausreichende und unzureichende Umgebungshelligkeit gestatten, wodurch die Auswertung und Weiterverarbeitung innerhalb der Steuereinheit besonders einfach ausführbar ist. Das empfangene Signal kann direkt in ein Warnsignal umgesetzt werden. Bestehende Einrichtungen können dazu leicht nachgerüstet werden oder sind bereits heute in der Lage, solche Signale zu verarbeiten.

In der Praxis sind Störungen beim Empfang des Signals nie völlig auszuschließen. Hierzu ist eine Ausführungsform des erfindungsgemäßen Verfahrens besonders vorteilhaft, bei der das Funksignal den Zeitpunkt des Beginns und den Zeitpunkt des Endes der ausreichenden Umgebungshelligkeit enthält. Diese beiden Zeitpunkte werden zweckmäßigerweise so lange gespeichert, bis sie von neueren Daten überschrieben werden. Erfahrungsgemäß verändern sich die Zeitpunkte im Laufe des Kalenderjahres nur recht langsam, so daß ein Ausfall der Empfangseinrichtung im Fahrzeug auch über einen längeren Zeitraum hinweg, beispielsweise einige Tage, keine gravierende Einschränkung der Funktion beinhaltet.

Der Zeitpunkt des Beginns sowie der Zeitpunkt des Endes der ausreichenden Umgebungshelligkeit muß zur weiteren Auswertung mit der jeweils aktuellen Uhrzeit verglichen werden. Dazu ist es besonders vorteilhaft, wenn die Steuereinheit die Uhrzeit mittels einer im Fahrzeug angeordneten Uhr erfaßt.

Eine weitere, besonders vorteilhafte Ausführungsform des Verfahrens, bei der die Steuereinheit die Uhrzeit mittels eines Empfängers zum Empfang von Funkuhr-Signalen erfaßt, erhöht die Sicherheit gegen Störeinflüsse wesentlich. Die Signale der Funkuhr korrigieren die mögliche, beispielsweise durch eine Ausfall der Stromversorgung verursachte Abweichung und sorgen auch bei Zeitumstellungen zuverlässig für die richtige Zeiteinstellung. Bei Unterbrechung der Funkverbindung läuft die Uhr mit hinreichender Genauigkeit bis zum Empfang neuer Signale weiter. Denkbar ist auch eine Ausführung, bei der die Uhr physisch nicht vorhanden ist und lediglich die Signale der Funkuhr in die Steuereinheit direkt eingehen.

Das erfindungsgemäße Verfahren arbeitet zuverlässig, wenn die Steuereinheit den Zeitpunkt des Beginns der ausreichenden Umgebungshelligkeit, des Endes der ausreichenden Umgebungshelligkeit, die Uhrzeit und den Schaltzustand der Lichtanlage des Fahrzeugs erfaßt und, falls die Uhrzeit zwischen dem Zeitpunkt des Beginns der ausreichenden Umgebungshelligkeit und dem Zeitpunkt des Endes der ausreichenden Umgebungshelligkeit liegt und die Lichtanlage des Fahrzeugs ausgeschaltet ist, ein Warnsignal erzeugt.

In der Praxis ist es häufig erforderlich, daß ein Warnsignal nur dann ausgelöst wird, wenn das Fahrzeug tatsächlich fährt. Das läßt sich gemäß einer anderen Weiterbildung der Erfindung erreichen, wenn die Steuereinheit die Geschwindigkeit des Fahrzeugs erfaßt und nur dann ein Warnsignal erzeugt, wenn die Geschwindigkeit von null abweicht.

Vielfach ist es auch bei Tag erforderlich, die Lichtanlage des Fahrzeugs einzuschalten. Dies ist z. B. in Tunneln der Fall, wo besonders häufig vergessen wird, die Lichtanlage einzuschalten. Eine zuverlässige Erkennung solcher Gefahrenstellen läßt sich auch nach einer weiteren erfindungsgemäßen Abwandlung des Verfahrens realisieren, wenn der Anfang und das Ende einer Gefahrenstelle jeweils mit einer Sendeeinrichtung versehen ist, die ein zusätzliches von der Steuereinheit erkennbares Signal sendet.

Auch mit den bereits bestehenden Einrichtungen können besondere Gefahrenstellen durch entsprechende Warnsignale abgesichert werden. Hierzu schaffen die mit Satelliten arbeitenden Navigationssysteme (GPS) die geeigneten Voraussetzungen. Eine entsprechende Weiterbildung des Verfahrens liegt vor, wenn die Steuereinheit Signale zur Bestimmung der geographischen Position beispielsweise mittels einer Navigationseinrichtung erfaßt und ein Warnsignal erzeugt, wenn sich das Fahrzeug kurz vor oder nach einem von der Umgebungshelligkeit abgeschirmten Bereich, insbesondere einer Unterführung, einem Tunnel etc. befindet.

Für den Fahrzeugführer sind solche Hinweise besonders wertvoll, welche auch besondere Vorschriften zum Einschalten der Lichtanlage in verschiedenen Gebieten oder Hoheitsgebiete mit berücksichtigen. So ist beispielsweise in skandinavischen Ländern das Einschalten der Lichtanlage auch tagsüber vorgeschrieben. Die vorliegende Erfindung ist besonders vorteilhaft weitergebildet, wenn mit der Steuereinheit die Signale einer Navigationseinrichtung zur Erfassung der geographischen Position empfangen werden, die Position mit einer Straßenkarte abgleicht und ein Warnsignal erzeugt, wenn sich das Fahrzeug in einem Gebiet befindet, in dem das Fahren mit eingeschalteter Lichtanlage auch bei ausreichender Umgebungshelligkeit erforderlich oder vorgeschrieben ist.

Das zweitgenannte Problem, die Schaffung einer Vorrichtung zur Verwendung bei dem Verfahren wird gemäß Anspruch 13 gelöst.

Eine Vorrichtung, die auf die Unterbrechung der Funkübertragung der Signale unempfindlich reagiert, ist durch eine weitere erfindungsgemäße Ausführungsform der Erfindung erreicht, wenn die Steuereinheit eine Speichereinheit aufweist. Die gespeicherten Daten verbleiben in der Speichereinheit zumindest bis neuere Signale empfangen werden können.

Das Warnsignal darf in der praktischen Anwendung die Aufmerksamkeit des Fahrzeugführers nicht ablenken. Ein Warnsignal, welches gut wahrnehmbar ist, aber dennoch den Fahrzeugführer weder erschreckt noch von ihm eine sofortige Reaktion verlangt, ist bei einer besonders vorteilhaften Weiterbildung der Erfindung gegeben, wenn das Warnsignal zur Information des Bedieners ein optischer Warnhinweis, insbesondere eine Textanzeige, ist.

Eine zentrale Anordnung eines solchen Displays, die darüber hinaus im ständigen Blickfeld des Fahrers angeordnet ist, verbessert die Wirkung und wird kaum übersehen. Eine vorteilhafte Ausführungsform, bei der das Display in der Instrumententafel angeordnet ist, kann insbesondere unter Einbeziehung vorhandener digitaler Anzeigevorrichtungen realisiert werden.

Das erfindungsgemäße Verfahren und die Vorrichtung zur Anwendung bei dem Verfahren lassen verschiedene Abwandlungen zu. Zur weiteren Verdeutlichung der Erfindung wird nachfolgend auf die Zeichnung Bezug genommen. Diese zeigt in
- Figur 1: einen Ablaufplan der Signalverarbeitung innerhalb der Steuereinheit mit zwei Eingangssignalen,
- Figur 2: einen Ablaufplan der Signalverarbeitung innerhalb der Steuereinheit mit drei Eingangssignalen,
- Figur 3: einen Ablaufplan der Signalverarbeitung innerhalb der Steuereinheit mit vier Eingangssignalen.

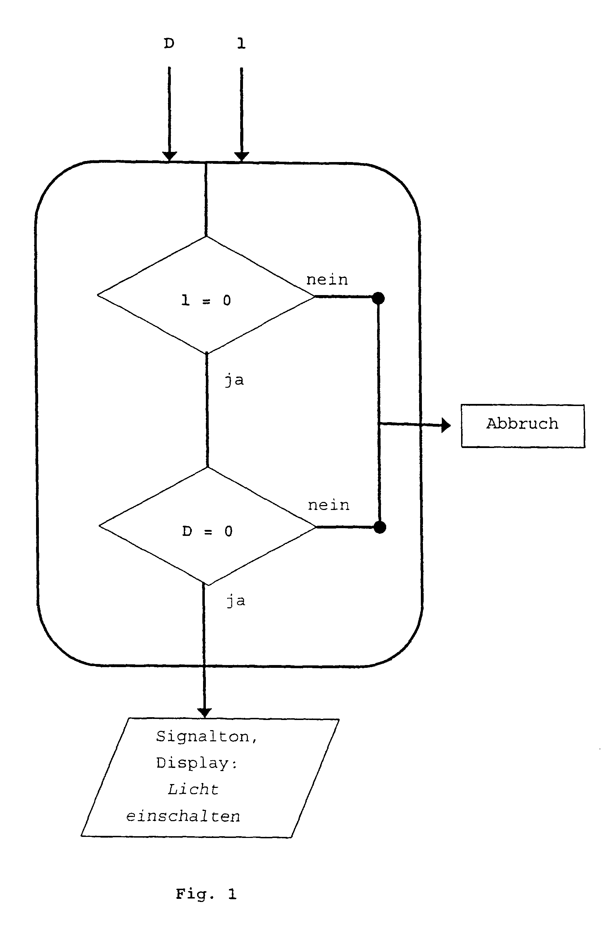

Die Figur 1 zeigt einen Ablaufplan der Signalverarbeitung innerhalb der Steuereinheit. Die beiden Eingangssignale sind mit D für das Funksignal der Umgebungshelligkeit und I für den Schaltzustand des Lichtschalters bezeichnet. Die Signale können dabei jeweils entweder den Wert 0 oder 1 annehmen, und zwar 0 für "Dunkelheit" bzw. "Licht ausgeschaltet" und 1 für "Helligkeit" bzw. "Licht eingeschaltet". Die Logikverarbeitung innerhalb der Steuereinheit erzeugt nur dann ein Ausgangssignal, beispielsweise einen Signalton oder eine Anzeige auf einem Display *"Licht einschalten",* wenn auf das Signal "0" für unzureichende Umgebungshelligkeit das Signal "0" für ausgeschaltetes Licht folgt. Hat eines der beiden Signale den Wert "1" führt dies zum Abbruch.

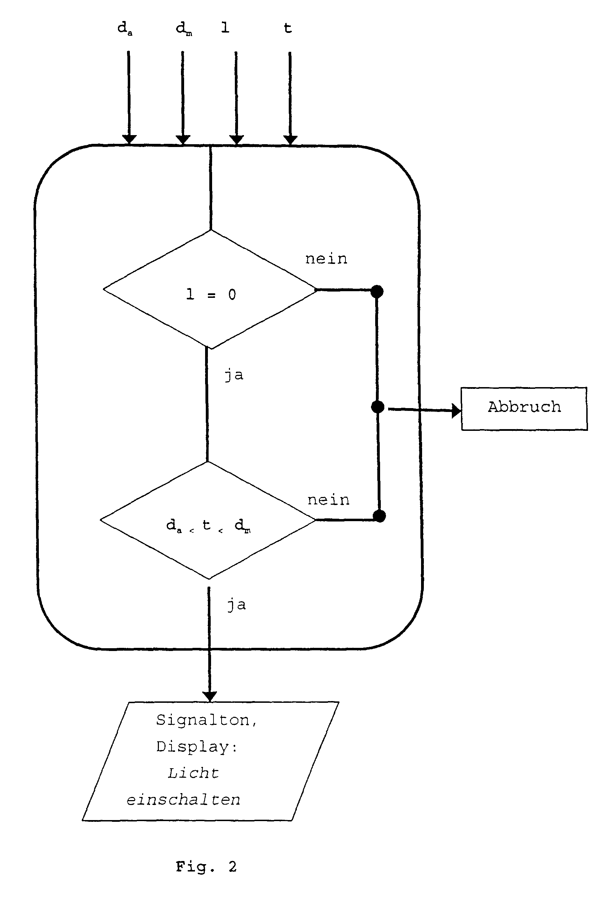

Die Figur 2 zeigt einen weiteren erfindungsgemäßen Ablaufplan der Signalverarbeitung. Die Eingangssignale der Steuereinheit umfassen bei dieser Verfahrensweise die Größen dₐ und dₘ für Beginn und Ende der Dunkelheit, I für den Schaltzustand des Lichtschalters und t für die momentane Uhrzeit innerhalb der Steuereinheit. Bei diesem Verfahren erzeugt die Steuereinheit lediglich dann ein Warnsignal, wenn das Licht ausgeschaltet ist ( I = 0 ) und die momentane Uhrzeit in dem durch Beginn und Ende der Dunkelheit (dₐ und dₘ) begrenzten Zeitraum liegt. Das Warnsignal besteht wahlweise aus einem Signalton oder einer Anzeige auf einem Display, oder auch aus einer Kombination von beidem.

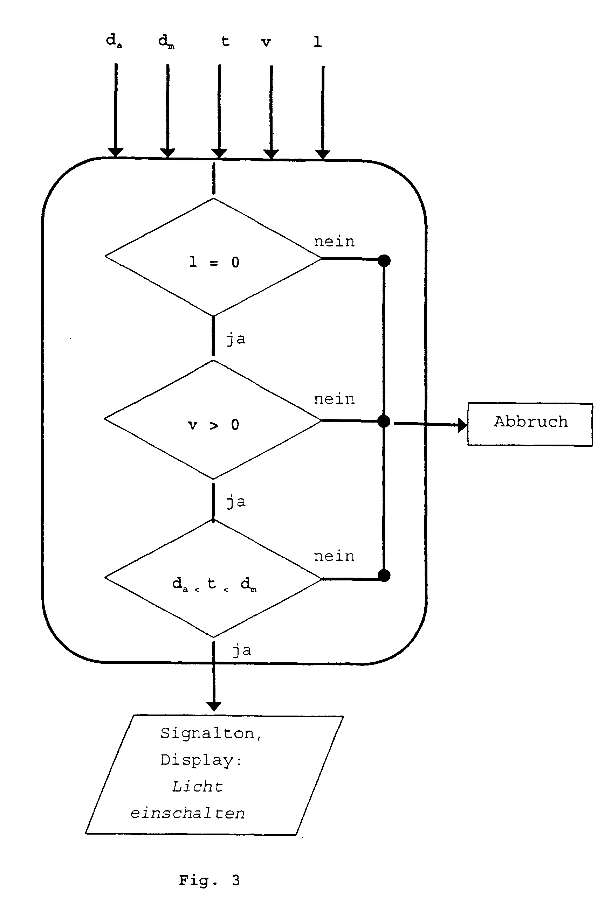

Der in Figur 3 gezeigte Ablaufplan der Signalverarbeitung unterscheidet sich von dem in Figur 2 gezeigten Ablaufplan lediglich durch die zusätzlich erfaßte Signalgröße v für die Geschwindigkeit des Fahrzeugs. Demnach führt die Signalverarbeitung auch dann zum Abbruch, wenn die erfaßte Geschwindigkeit gleich null ist. Das Warnsignal besteht wiederum wahlweise aus einem akustischen Warnton, einer optischen Anzeige oder einer Kombination von beidem.

Grundsätzlich ist für die in den Figuren 1 bis 3 gezeigten Ablaufpläne die Reihenfolge bei der Verarbeitung der verschiedenen Signale ohne Bedeutung. Dargestellt ist eine Verfahrensweise, die zunächst mit der Auswertung der bordeigenen Signale beginnt und im Anschluß daran die Funksignale auswertet.

## Patentansprüche

1. Verfahren zum Erzeugen eines Warnsignales zum Einschalten der Lichtanlage eines Fahrzeuges, bei welchem in einem ersten Schritt ein Außenlichtsignal als Funksignal (D) gesendet und vom Fahrzeug empfangen wird und Betriebsdaten des Fahrzeuges erfaßt werden, und daß anschließend eine Auswertung der Daten mittels einer Steuereinheit vorgenommen wird, **dadurch gekennzeichnet, daß** die Steuereinheit das Funksignal mit Daten der Umgebungshelligkeit und den Schaltzustand der Lichtanlage des Fahrzeuges erfaßt und bei ausgeschalteter Lichtanlage des Fahrzeuges und unzureichender Umgebungshelligkeit ein Warnsignal zur Information des Bedieners erzeugt.

2. Verfahren nach Anspruch 1, **dadurch gekennzeichnet, daß** das Funksignal mittels eines im Fahrzeug angeordneten Radios empfangen wird.

3. Verfahren nach Anspruch 1, **dadurch gekennzeichnet, daß** das Funksignal mittels eines im Fahrzeug angeordneten Funktelefons, insbesondere eines Autotelefons, empfangen wird.

4. Verfahren nach Anspruch 1, **dadurch gekennzeichnet, daß** das Funksignal Daten der Umgebungshelligkeit enthält, die der Steuereinheit die Unterteilung in ausreichende und unzureichende Umgebungshelligkeit gestatten.

5. Verfahren nach Anspruch 1, **dadurch gekennzeichnet, daß** das Funksignal den Zeitpunkt des Beginns und den Zeitpunkt des Endes der ausreichenden Umgebungshelligkeit enthält.

6. Verfahren nach Anspruch 1, **dadurch gekennzeichnet, daß** die Steuereinheit die Uhrzeit (t) mittels einer im Fahrzeug angeordneten Uhr erfaßt.

7. Verfahren nach Anspruch 1, **dadurch gekennzeichnet, daß** die Steuereinheit die Uhrzeit mittels eines Empfängers zum Empfang von Funkuhr-Signalen erfaßt.

8. Verfahren nach Anspruch 1, **dadurch gekennzeichnet, daß** die Steuereinheit den Zeitpunkt des Beginns der ausreichenden Umgebungshelligkeit, des Endes der ausreichenden Umgebungshelligkeit, die Uhrzeit und den Schaltzustand der Lichtanlage des Fahrzeugs erfaßt und, falls die Uhrzeit zwischen dem Zeitpunkt des Beginns der ausreichenden Umgebungshelligkeit und dem Zeitpunkt des Endes der ausreichenden Umgebungshelligkeit liegt und die Lichtanlage des Fahrzeugs ausgeschaltet ist, das Warnsignal erzeugt.

9. Verfahren nach Anspruch 1, **dadurch gekennzeichnet, daß** die Steuereinheit die Geschwindigkeit des Fahrzeugs erfaßt und nur dann das Warnsignal erzeugt, wenn die Fahrzeuggeschwindigkeit von null abweicht oder der Motor läuft.

10. Verfahren nach Anspruch 1, **dadurch gekennzeichnet, daß** der Anfang und das Ende einer Gefahrenstelle jeweils mit einer Sendeeinrichtung versehen wird, die ein von der Steuereinheit erkennbares Signal sendet.

11. Verfahren nach Anspruch 1, **dadurch gekennzeichnet, daß** die Steuereinheit Signale zur Bestimmung der geographischen Position beispielsweise mittels einer Navigationseinrichtung erfaßt und das Warnsignal erzeugt, wenn sich das Fahrzeug in einem von der Umgebungshelligkeit abgeschirmten Bereich, insbesondere einer Unterführung, einem Tunnel etc. befindet.

12. Verfahren nach Anspruch 1, **dadurch gekennzeichnet, daß** mit der Steuereinheit die Signale einer Navigationseinrichtung zur Erfassung der geographischen Position empfangen werden, die Position mit einer Straßenkarte abgleicht und das Warnsignal erzeugt, wenn sich das Fahrzeug in einem Gebiet befindet, in dem das Fahren mit eingeschalteter Lichtanlage auch bei ausreichender Umgebungshelligkeit erforderlich oder vorgeschrieben ist.

13. Vorrichtung zur Anwendung des Verfahrens nach zumindest einem der vorangehenden Ansprüche, welche Mittel zum Erkennen des Außenlichtes und eine Steuereinheit aufweist, wobei das Mittel zum Erkennen des Außenlichtes ein Funksignalempfänger ist, daß die Steuereinheit eine Einrichtung zur Erfassung des Schaltzustandes des Lichtschalters und eines Funksignales (D) aufweist, **dadurch gekennzeichnet, daß** weiterhin ein Schaltelement zur logischen Verknüpfung der Schaltzustände des Funksignales und des Lichtschalters vorhanden ist und die Steuereinheit bei unzureichender Umgebungshelligkeit und bei ausgeschaltetem Licht eine Einrichtung zur Erzeugung eines Warnsignales ansteuert.

14. Vorrichtung nach Anspruch 13, **dadurch gekennzeichnet, daß** die Steuereinheit eine Speichereinheit aufweist.

15. Vorrichtung nach Anspruch 13, **dadurch gekennzeichnet, daß** das Warnsignal zur Information des Bedieners ein optischer Warnhinweis, insbesondere eine Textanzeige ist.

16. Vorrichtung nach Anspruch 13, **dadurch gekennzeichnet, daß** die Textanzeige in der Instrumententafel angeordnet ist.

## Claims

1. Method for producing a warning signal for switching on a vehicle lighting system in which, in a first step, an external light signal is transmitted as a radio signal (D), is received by the vehicle and operating data of the vehicle are detected, and, subsequently, the data are evaluated by means of a control unit, **characterized in that** the control unit detects the radio signal with data relating to the environmental brightness and detects the switching state of the vehicle lighting system, and produces a warning signal for information of the operator if the vehicle lighting system is switched off and the environmental brightness is inadequate.

2. Method according to Claim 1, **characterized in that** the radio signal is received by means of a radio arranged in the vehicle.

3. Method according to Claim 1, **characterized in that** the radio signal is received by means of a radio telephone arranged in the vehicle, in particular a car telephone.

4. Method according to Claim 1, **characterized in that** the radio signal includes data relating to the environmental brightness, which allow the control unit to subdivide into adequate and inadequate environmental brightness.

5. Method according to Claim 1, **characterized in that** the radio signal includes the time of the start and the time of the end of the adequate environmental brightness.

6. Method according to Claim 1, **characterized in that** the control unit detects the real time (t) by means of a clock arranged in the vehicle.

7. Method according to Claim 1, **characterized in that** the control unit detects the real time by means of a receiver for receiving radio clock signals.

8. Method according to Claim 1, **characterized in that** the control unit detects the time of the start of the adequate environmental brightness, of the end of the adequate environmental brightness, the real time and the switching state of the vehicle lighting system, and produces the warning signal if the real time is between the time of the start of the adequate environmental brightness and the time of the end of the adequate environmental brightness and the vehicle lighting system is switched off.

9. Method according to Claim 1, **characterized in that** the control unit detects the speed of the vehicle and produces the warning signal only if the vehicle speed is not zero or the engine is running.

10. Method according to Claim 1, **characterized in that** the start and the end of a danger point are each provided with a transmitting device which transmits a signal which can be identified by the control unit.

11. Method according to Claim 1, **characterized in that** the control unit detects signals for determining the geographical position, for example by means of a navigation device, and produces the warning signal if the vehicle is located in an area which is screened from the environmental brightness, in particular an underpass, a tunnel etc.

12. Method according to Claim 1, **characterized in that** the control unit receives the signals of a navigation device for detecting the geographical position, matches the position to a road map and produces the warning signal if the vehicle is located in a region in which there is a necessity or a requirement to drive with the lighting system switched on even if the environmental brightness is adequate.

13. Apparatus for application of the method according to at least one of the preceding claims, which has means for identifying the external light and a control unit, where the means for identifying the external light is a radio signal receiver, where the control unit has a device for detecting the switching state of the light switch and a radio signal (D) **characterized in that**, furthermore, a switching element is provided for logically linking the switching states of the radio signal and the light switch and the control unit drives a device for producing a warning signal when the environmental brightness is inadequate and when the light is switched off.

14. Apparatus according to Claim 13, **characterized in that** the control unit has a memory unit.

15. Apparatus according to Claim 13, **characterized in that** the warning signal for information of the operator is visual warning information, in particular a text display.

16. Apparatus according to Claim 13, **characterized in that** the text indication is arranged in the instrument panel.

## Revendications

1. Procédé pour engendrer un signal d'alerte pour allumer l'équipement d'éclairage d'un véhicule avec lequel, dans une première étape, un signal de lumière extérieure est émis sous la forme d'un signal radioélectrique (D) et reçu par le véhicule et les informations de fonctionnement du véhicule sont détectées, et où une analyse des informations est ensuite effectuée à l'aide d'une unité de commande, **caractérisé en ce que** l'unité de commande détecte le signal radioélectrique contenant des informations de luminosité ambiante et d'état logique de l'équipement d'éclairage du véhicule et engendre un signal d'alerte destiné à l'information du conducteur si l'équipement d'éclairage du véhicule est éteint et la luminosité ambiante est insuffisante.

2. Procédé selon la revendication 1, **caractérisé en ce que** le signal radioélectrique est reçu à l'aide d'une radio installée dans le véhicule.

3. Procédé selon la revendication 1, **caractérisé en ce que** le signal radioélectrique est reçu à l'aide d'un radiotéléphone, plus précisément un téléphone de voiture, installé dans le véhicule.

4. Procédé selon la revendication 1, **caractérisé en ce que** le signal radioélectrique contient des informations de luminosité ambiante, lesquelles permettent à l'unité de commande de faire la distinction entre des luminosités ambiantes suffisante et insuffisante.

5. Procédé selon la revendication 1, **caractérisé en ce que** le signal radioélectrique contient le moment du début et le moment de la fin de la luminosité ambiante suffisante.

6. Procédé selon la revendication 1, **caractérisé en ce que** l'unité de commande reçoit l'heure (t) à l'aide d'une horloge installée dans le véhicule.

7. Procédé selon la revendication 1, **caractérisé en ce que** l'unité de commande reçoit l'heure à l'aide d'un émetteur destiné à recevoir des signaux horaires radioélectriques.

8. Procédé selon la revendication 1, **caractérisé en ce que** l'unité de commande reçoit le moment du début de la luminosité ambiante suffisante, de la fin de la luminosité ambiante suffisante, l'heure et l'état logique de l'équipement d'éclairage du véhicule et engendre le signal d'alerte si l'heure se trouve entre le moment du début de la luminosité ambiante suffisante et le moment de la fin de la luminosité ambiante suffisante et si l'équipement d'éclairage du véhicule est éteint.

9. Procédé selon la revendication 1, **caractérisé en ce que** l'unité de commande détecte la vitesse du véhicule et n'engendre le signal d'alerte que si la vitesse du véhicule est différente de zéro ou si le moteur tourne.

10. Procédé selon la revendication 1, **caractérisé en ce que** le début et la fin d'un point de danger sont respectivement munis d'un équipement émetteur qui émet un signal détectable par l'unité de commande.

11. Procédé selon la revendication 1, **caractérisé en ce que** l'unité de commande détecte les signaux destinés à déterminer la position géographique à l'aide d'un dispositif de navigation, par exemple, et engendre le signal d'alerte lorsque le véhicule se trouve dans une zone non couverte par la luminosité ambiante, notamment un passage souterrain, un tunnel, etc.

12. Procédé selon la revendication 1, **caractérisé en ce que** l'unité de commande reçoit les signaux d'un dispositif de navigation destiné à détecter la position géographique, compare la position avec une carte routière et engendre le signal d'alerte lorsque le véhicule se trouve dans une région dans laquelle il est nécessaire ou obligatoire d'allumer l'équipement d'éclairage pendant les déplacements même si la luminosité ambiante est suffisante.

13. Dispositif pour la mise en oeuvre du procédé selon au moins l'une des revendications précédentes, lequel présente un moyen pour détecter la lumière extérieure et une unité de commande, le moyen pour détecter la lumière extérieure étant un récepteur de signal radioélectrique, l'unité de commande présentant un dispositif pour détecter l'état logique du commutateur d'éclairage et d'un signal radioélectrique (D), **caractérisé en ce qu'**il comprend en plus un élément de commutation pour combiner logiquement les états logiques du signal radioélectrique et du commutateur d'éclairage et l'unité de commands active un équipement destiné à engendrer un signal d'alerte lorsque la luminosité ambiante est insuffisante et les feux sont éteints.

14. Dispositif selon la revendication 13, **caractérisé en ce que** l'unité de commande présente une unité de mémorisation.

15. Dispositif selon la revendication 13, **caractérisé en ce que** le signal d'alerte destiné à l'information du conducteur est une indication d'alerte visuelle, plus particulièrement l'affichage d'un texte.

16. Dispositif selon la revendication 13, **caractérisé en ce que** l'afficheur de texte est disposé dans le tableau de bord.
